# EUROPÄISCHE PATENTANMELDUNG

(11) **EP 2 441 619 A1**
(43) Veröffentlichungstag der Anmeldung: **18.04.2012**
(21) Anmeldenummer: 11184486.6
(22) Anmeldetag: 10.10.2011
(51) Int. Cl.: B60Q 1/00, H05B 37/02, H05B 33/08

(54) **Beleuchtungseinrichtung für ein Kraftfahrzeug**

(30) Priorität: 15.10.2010 DE 102010048661
(71) Anmelder: Automotive Lighting Reutlingen GmbH, 72762 Reutlingen (DE)
(72) Erfinder: Schnerr, Michael, 72766 Reutlingen-Sondelfingen (DE); Blum, Dirk, 72076 Tübingen (DE)
(74) Vertreter: Dreiss

(57) **Zusammenfassung**

Die vorliegende Erfindung betrifft eine Beleuchtungseinrichtung (40) für ein Kraftfahrzeug, mit mindestens einer Halbleiterlichtquelle (10), einer Steuer-und/oder Regeleinrichtung (14), und mit einem der Halbleiterlichtquelle (10) zugeordneten Speicherelement (26), auf dem charakterisierende Informationen der mindestens einen Halbleiterlichtquelle (10) gespeichert sind. Die Steuer- und/oder Regeleinrichtung (14) weist Mittel zum kontaktlosen Auslesen und Auswerten der Informationen auf. Die Beleuchtungseinrichtung (40) weist ein Sensorelement (20) auf, und die Steuer- und/oder Regeleinrichtung (14) ist dazu eingerichtet, eine Messgröße unter Verwendung des Sensorelements (20) kontaktlos zu erfassen und eine Betriebsgröße der Halbleiterlichtquelle (10) in Abhängigkeit von Informationen und der kontaktlos erfassten Messgröße des Sensorelements (20) einzustellen.

## Beschreibung

Die vorliegende Erfindung betrifft eine Beleuchtungseinrichtung für ein Kraftfahrzeug nach dem Oberbegriff des Anspruchs 1 sowie eine Steuer- und/oder Regeleinrichtung nach dem Oberbegriff des Anspruchs 7 und ein Sensorelement nach dem Oberbegriff des Anspruchs 10. Solche Vorrichtungen sind per se bekannt.

Aus dem Stand der Technik sind verschiedenartige Beleuchtungseinrichtungen für Kraftfahrzeuge bekannt. Aktive Beleuchtungseinrichtung sind beispielsweise Scheinwerfer und Leuchten. Sie weisen üblicherweise mindestens eine Lichtquelle auf, die im Zusammenwirken mit mindestens einer Primäroptik (z.B. Reflektor, Vorsatzoptik) eventuell auch mit einer entsprechenden Sekundäroptik (Sammellinse) und einer Ausbildung einer die Lichtaustrittsfläche der Beleuchtungseinrichtung verschließenden transparenten Abdeckscheibe eine gewünschte Lichtverteilung erzeugen. Die Abdeckscheibe kann dabei optisch wirksame Profile aufweisen und sie kann eingefärbt sein.

Die mindestens eine Lichtquelle der Beleuchtungseinrichtungen ist in der Regel in Form einer Glühlampe, Gasentladungslampe oder Halbleiterlichtquelle ausgebildet. Insbesondere beim Betreiben der Beleuchtungseinrichtung mit Halbleiterlichtquellen, beispielsweise mit Leuchtdioden, muss eine fertigungsbedingt relativ breite Streuung von Eigenschaften der Halbleiterlichtquellen berücksichtigt werden. So strahlen nicht alle Halbleiterlichtquellen bei gleicher Stromstärke mit der gleichen Helligkeit; auch eine Farbtemperatur kann zwischen den einzelnen Halbleiterlichtquellen unterschiedlich sein.

Zur Berücksichtigung unterschiedlicher Eigenschaften werden die Halbleiterlichtquellen vom Hersteller in Klassen (sogenannte Bins) eingeteilt, wobei in jeder Klasse Halbleiterlichtquellen mit innerhalb einer zulässigen Toleranz gleichen Eigenschaften zusammengefasst sind. Die Klasseneinteilung wird als Binning bezeichnet. Das bedeutet, dass alle Halbleiterlichtquellen eines Bins bei gleicher Stromstärke im Wesentlichen den gleichen Lichtstrom bei gleicher Farbtemperatur emittieren. Ist bevorzugt nur eine entsprechende Helligkeit der Halbleiterlichtquellen von Bedeutung, wird vom Hersteller ein sog. Helligkeitsbin angegeben. So sollten bevorzugt alle Halbleiterlichtquellen, die auf einer Leiterplatte angeordnet werden, das gleiche Helligkeitsbin aufweisen.

Die entsprechende Bin-Information wird vom Hersteller der Halbleiterlichtquellen in der Regel in Form einer den Halbleiterlichtquellen zugeordneten Codierung mitgeteilt. Die Codierung muss zum Betreiben der Halbleiterlichtquellen in der Beleuchtungseinrichtung derart umgesetzt werden, dass anschließend in einer Steuer- und/oder Regeleinrichtung zum Betreiben der Halbleiterlichtquellen eine entsprechend angepasste Stromstärke erzeugt werden kann, die eine gewünschte Lichtstärke (Lichtstrom) in der Halbleiterlichtquelle erzeugt.

Um in der Steuer- und/oder Regeleinrichtung den entsprechenden Helligkeitsbin-Wert für die zu betreibenden Halbleiterlichtquellen selbstständig ermitteln zu können, wird beispielsweise auf der Leiterplatte, beziehungsweise auf dem Trägerelement der Halbleiterlichtquellen, bekanntermaßen ein Messwiderstand angeordnet, dessen elektrischer Widerstandswert eine Zuordnung zum aktuellen Helligkeitsbin liefert. Jeder Helligkeitsbin-Wert entspricht einem definierten elektrischen Widerstand. Die Kontakte des Messwiderstands sind auf der Leiterplatte, beziehungsweise auf dem Trägerelement, nach außen geführt, so dass der elektrische Widerstand über zwei an der Leiterplatte, beziehungsweise an dem Trägerelement, angeschlossenen separaten Messleitungen von der Steuer-und/oder Regeleinrichtung ermittelt werden kann. Dabei kann die Steuer- und/oder Regeleinrichtung bei einer Inbetriebnahme durch einmaliges Anschließen der beiden Messleitungen entsprechend eingestellt beziehungsweise programmiert werden. Die Messleitungen können aber auch fester Bestandteil der gesamten Anordnung über die gesamte Lebensdauer sein.

Zum ordnungsgemäßen Betreiben der Halbleiterlichtquelle ist neben der Information des herstellungsbedingten Bins auch eine aktuelle Betriebstemperatur der Halbleiterlichtquelle von Bedeutung, da der emittierte Lichtstrom der Halbleiterlichtquelle auch von der Betriebstemperatur der Halbleiterlichtquelle abhängig ist. Dazu ist bekanntermaßen auf der Leiterplatte, beziehungsweise auf dem Trägerelement, ein Temperatursensor angeordnet, über dessen Signale die Steuer- und/oder Regeleinrichtung - ebenfalls über zwei Messleitungen - die entsprechende Betriebstemperatur der Halbleiterlichtquellen ermitteln und die entsprechende Stromstärke daraufhin einstellen kann. Das Einstellen der entsprechenden Stromstärke kann beispielsweise über ein pulsweitenmoduliertes Signal realisiert werden. In der Realisierung können zwei der vier Messleitungen (für Messwiderstand und Temperatursensor) zusammengefasst werden, so dass nur drei Messleitungen zum ordnungsgemäßen Betreiben der Halbleiterlichtquellen erforderlich sind.

Zum Betreiben der Halbleiterlichtquellen sind also mindestens drei Messleitungen einerseits zum Programmieren der Steuer- und/oder Regeleinrichtung mit dem entsprechenden Bin-Wert und andererseits zur Ermittlung der jeweiligen Betriebstemperatur über den Temperatursensor nötig. Der Bauraum im Bereich der Beleuchtungseinrichtungen ist meist schon von vorn herein durch andere technische Einrichtungen überfrachtet. Dadurch ist nachteiligerweise der Zugang zu den entsprechenden Kontakten (Steckerpins) oft sehr erschwert. Ein mögliches Durchscheuern der Messleitungen in Laufe der Zeit durch Vibrationen und Erschütterungen des Kraftfahrzeugs kann außerdem zu einem Ausfall der Beleuchtungseinrichtung führen. Außerdem ist für jeden Steckerpin ein Schutz gegen Kurzschluss und gegen elektrostatische Entladungen notwendig. Dies erhöht die Herstellungskosten der Steuer- und/oder Regeleinrichtung.

Die DE 20 2007 006 171 U1 zeigt dazu eine Beleuchtungseinrichtung eines Kraftfahrzeugs, bei der charakterisierende Informationen über die Beleuchtungseinrichtung in codierter Form auf einem der Beleuchtungseinrichtung zugeordneten RFID-Etikett (Radio Frequency Identification) gespeichert sind. Es können auch charakterisierende Informationen der Halbleiterlichtquellen auf dem RFID-Etikett abgespeichert werden. Von einer Steuer- und/oder Regeleinrichtung wird diese Codierung über ein dort implementiertes RFID-Lesegerät gelesen, wodurch beispielsweise ein eventuell eingesetztes Plagiat der Beleuchtungseinrichtung erkannt werden kann.

Aufgabe der Erfindung ist, möglichst ohne Verwendung von Messleitungen ein zuverlässiges und ordnungsgemäßes Betreiben der Halbleiterlichtquellen in der Beleuchtungseinrichtung des Kraftfahrzeugs zu ermöglichen.

Diese Aufgabe wird mit den Merkmalen des unabhängigen Beleuchtungseinrichtungsanspruchs, des unabhängigen Steuer-und/oder Regeleinrichtungsanspruchs und des unabhängigen Sensorelementanspruchs gelöst. Die Erfindung zeichnet sich daher insbesondere dadurch aus, dass die Beleuchtungseinrichtung ein mit der mindestens einen Halbleiterlichtquelle gekoppeltes Sensorelement aufweist, und dass die Steuer- und/oder Regeleinrichtung dazu eingerichtet ist, eine Messgröße der mindestens einen Halbleiterlichtquelle unter Verwendung des Sensorelements kontaktlos zu erfassen und mindestens eine Betriebsgröße der mindestens einen Halbleiterlichtquelle in Abhängigkeit von den ausgelesenen charakterisierenden Informationen des Speicherelements und der kontaktlos erfassten Messgröße des Sensorelements einzustellen.

Der Erfindung liegt die Idee zu Grunde, alle Parameter zum ordnungsgemäßen Betreiben der mindestens einen Halbleiterlichtquelle kontaktlos, also ohne Messleitungen, durch die Steuer- und/oder Regeleinrichtung zu ermitteln. Anschließend kann die entsprechende Betriebsgröße zum Betreiben der mindestens einen Halbleiterlichtquelle von der Steuer- und/oder Regeleinrichtung eingestellt werden, so dass der gewünschte Lichtstrom von der mindestens einen Halbleiterlichtquelle emittiert werden kann. Die regel- bzw. steuerbare Betriebsgröße kann dabei eine elektrische Stromstärke, eine elektrische Spannung oder ein Tastverhältnis der Stromstärke und/oder der Spannung sein. Dabei wird vorausgesetzt, dass alle Halbleiterlichtquellen einem einzigen Bin zugeordnet sind. Die entsprechenden Parameter sind dabei im Wesentlichen einerseits das der mindestens einen Halbleiterlichtquelle vom Hersteller zugeordnete Helligkeitsbin und andererseits die entsprechende Betriebstemperatur der Halbleiterlichtquellen. Bei Bedarf können auch weitere Werte und/oder Eigenschaften bereitgestellt werden, wobei zum Beispiel das Helligkeitsbin noch um die Information über die entsprechende Farbtemperatur der mindestens einen Halbleiterlichtquelle ergänzt werden kann.

Die Bin-Information kann dabei zunächst als ein unveränderbarer Festwert über die gesamte Lebensdauer der mindestens einen Halbleiterlichtquelle angenommen werden. Eine bevorzugte Ausgestaltung sieht jedoch vor, Alterungseffekte der mindestens einen Halbleiterlichtquelle zu berücksichtigen. Die Alterung zeigt sich in einer Abnahme des Lichtstroms über der Betriebszeit. Sie wird zum Beispiel durch Zugriff auf eine in der Steuer- und/oder Regeleinrichtung abgelegte Kennlinie berücksichtigt, die eine Abhängigkeit des Lichtstroms von der Betriebszeit abbildet.

Die Bin-Information kann dabei in dem den Halbleiterlichtquellen zugeordneten Speicherelement, z.B. einem RFID-Speicherelement, nach dem aus dem Stand der Technik bekannten Verfahren abgelegt und kontaktlos ausgelesen werden. Dies kann bei Bedarf jederzeit durchgeführt werden.

Die Betriebstemperatur wird als Messgröße mit Hilfe des Sensorelements ermittelt. Das Sensorelement ist dabei dazu eingerichtet, die vom Sensorelement erzeugten Signale mit dem gleichen Verfahren, das auch zum Lesen der Bin-Information verwendet wird, zum Beispiel mit dem Verfahren der RFID-Kommunikation, zu erfassen. Das Sensorelement kann dabei beispielsweise Temperatur-abhängige Widerstände oder Thermoelemente umfassen.

Bei Verwendung einer solchen Anordnung kann zum Ermitteln der Bin-Information sowie der Betriebstemperatur vorteilhafterweise auf Messleitungen mit dazu notwendigen Steckerpins an der Steuer- und/oder Regeleinrichtung verzichtet werden. Damit können auch die Schutzschaltungen entfallen, die eine Kurzschlussfestigkeit und einen Schutz gegen elektrostatische Entladungen gewährleisten müssen.

Die im Stand der Technik notwendige separate Programmierung der Steuer- und/oder Regeleinrichtung mit der entsprechenden Bin-Information über Mess― bzw. Programmierleitungen ist nicht mehr notwendig oder kann auch im verbauten Zustand der Beleuchtungseinrichtung sicher und einfach durchgeführt werden. Bekannte Toleranzprobleme bei der Verwendung von Messwiderständen spielen keine Rolle mehr.

Während einer Montage, einer Wartung (Diagnose) oder auch im Betrieb der Beleuchtungseinrichtung können die Parameter zum Betreiben der mindestens einen Halbleiterlichtquelle zu einer Überprüfung beziehungsweise zu einer Nachverfolgbarkeit (Traceability) jederzeit leicht ausgelesen werden.

Auch ein Durchreichen der Parameter zu anderen Steuer-und/oder Regeleinrichtungen des Kraftfahrzeugs kann bei Bedarf einfach realisiert werden. All dies macht die Beleuchtungseinrichtung sowie das Betreiben der Beleuchtungseinrichtung kostengünstiger, wartungsfreundlicher und erheblich betriebssicherer.

Möglich ist natürlich auch, dass darüber hinaus zum Beispiel Fertigungsdaten eines Lichtmoduls, beziehungsweise eines ganzen Scheinwerfers, in dem Speicherelement, beispielsweise zu einer Nachverfolgbarkeit (Traceability) im Falle einer technischen Störung, bereitgestellt werden. Auch können technische Daten, beispielsweise zu einer Harmonisierung der Lichtwerte einer Matrix aus Halbleiterlichtquellen gespeichert werden, da jede Halbleiterlichtquelle individuelle Abgleichdaten für einen homogenen Gesamteindruck nach außen benötigt. Dies würde eine lichttechnische Adaptierung des Lichtmoduls oder des Scheinwerfers erheblich erleichtern.

Besonders vorteilhaft ist dabei, dass das Sensorelement in das Speicherelement integriert ist. Das bedeutet, dass das Sensorelement und das Speicherelement eine integrale Einheit bilden. Dabei kann das kombinierte Speicher- und Sensorelement direkt mit der mindestens einen Halbleiterlichtquelle gekoppelt sein. Alternativ dazu kann das kombinierte Speicher- und Sensorelement aber auch beispielsweise auf der Leiterplatte oder dem Trägerelement der mindestens einen Halbleiterlichtquelle - möglichst örtlich nahe an mindestens einer Halbleiterlichtquelle - angeordnet sein. Natürlich können auch mehrere kombinierte Speicher- und Sensorelemente auf der Leiterplatte angeordnet sein. Dadurch können Temperaturen an unterschiedlichen Positionen der Leiterplatte ermittelt und in der Steuer- und/oder Regeleinrichtung entsprechend ausgewertet werden. Die Kombination des Speicher- und Sensorelements kann beispielsweise durch ein sogenanntes semi-aktives RFID-Speicherelement realisiert werden, wobei neben der Speicherung von Festwerten in einem RFID-Speicherelement auch Sensorfunktionen unterstützt werden können. In der Regel benötigen diese semi-aktiven RFID― Speicherelemente eine Stützbatterie zum Betreiben der Sensorfunktion.

Ferner ist vorteilhaft, dass das Speicherelement und das Sensorelement, sowie die Mittel zum kontaktlosen Auslesen der gespeicherten Informationen Teil eines RFID-Systems sind. Das bedeutet, dass die auf dem Speicherelement, beziehungsweise auf dem Sensorelement gespeicherten Informationen nach den Regeln des RFID-Systems aufbereitet sind. Die Steuer- und/oder Regeleinrichtung weist zusätzlich eine Leseeinrichtung zum kontaktlosen Auslesen der auf dem Speicherelement, beziehungsweise dem Sensorelement, aufbereiteten Informationen auf. Besondere Vorteile gängiger RFID-Systeme bestehen in der hohen Verfügbarkeit und den geringen Kosten. Zum Lesen der Daten sowie zur Datenübertragung ist keine eigene Energiequelle nötig. Aktive RFID-Elemente mit einer Batterie sind allerdings auch bekannt. Auf dem Speicherelement sind die Daten vorzugsweise permanent gespeichert ohne dass Energie extern zugeführt werden muss. Flüchtige, volatile Speicher, insbesondere in aktiven Speicherelementen, sind auch bekannt.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ein Ausführungsbeispiel der Erfindung ist in den Zeichnungen dargestellt und wird in der nachfolgenden Beschreibung näher erläutert. Dabei zeigen, jeweils in schematischer Form:
- Fig. 1: eine Anordnung zum Betrieb einer Halbleiterlichtquelle in einer Beleuchtungseinrichtung eines Kraftfahrzeugs im Stand der Technik;
- Fig. 2: eine Anordnung zum Betrieb einer Halbleiterlichtquelle in einer erfindungsgemäßen Beleuchtungseinrichtung in einer bevorzugten Ausführungsform;
- Fig. 3: eine prinzipielle Darstellung eines RFID-Systems;
- Fig. 4: eine Darstellung eines RFID-Etiketts; und
- Fig. 5: eine Darstellung einer erfindungsgemäßen Beleuchtungseinrichtung im Längsschnitt.

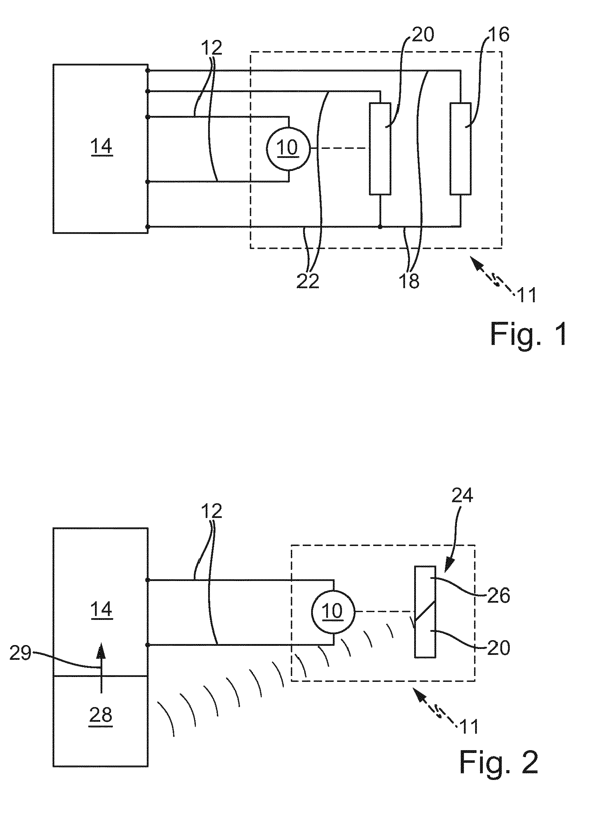

Fig. 1 zeigt eine Anordnung zum Betrieb einer Halbleiterlichtquelle 10 in einer Beleuchtungseinrichtung eines Kraftfahrzeugs im Stand der Technik. Die Darstellung zeigt nur eine einzige Halbleiterlichtquelle 10; in der Beleuchtungseinrichtung können jedoch auch mehrere Halbleiterlichtquellen 10 auf einer Leiterplatte beziehungsweise auf einem Trägerelement 11 angeordnet sein. Die Halbleiterlichtquelle 10 kann beispielsweise als eine Leuchtdiode ausgebildet sein. Die Halbleiterlichtquelle 10 wird über zwei elektrisch leitende Betriebsleitungen 12 durch eine als einzelnes Steuergerät ausgestaltete Steuer-und/oder Regeleinrichtung 14 betrieben. Die Steuer-und/oder Regeleinrichtung 14 ist dazu eingerichtet, die Halbleiterlichtquelle 10 durch eine Ausgabe von Betriebsgrößen der Halbleiterlichtquelle 10 zu betreiben. Eine Betriebsgröße kann dabei eine elektrische Stromstärke, eine elektrische Spannung oder ein Tastverhältnis einer Pulsweitenmodulation der Stromstärke und/oder der Spannung sein.

Zum Betreiben der Halbleiterlichtquelle 10 muss eine fertigungsbedingt relativ breite Streuung von Eigenschaften der Halbleiterlichtquellen berücksichtigt werden. So strahlen nicht alle Halbleiterlichtquellen bei gleicher Stromstärke mit der gleichen Helligkeit. Auch eine Farbtemperatur kann zwischen den einzelnen Halbleiterlichtquellen unterschiedlich sein. Wie oben bereits erwähnt, werden zur Berücksichtigung dieser Unterschiede die Halbleiterlichtquellen vom Hersteller in Klassen (sogenannte Bins) eingeteilt, wobei in jeder Klasse Halbleiterlichtquellen innerhalb einer zulässigen Toleranz mit gleichen Eigenschaften zusammengefasst sind.

Bei der Verwendung mehrerer Halbleiterlichtquellen sollten alle Halbleiterlichtquellen, die auf einer Leiterplatte angeordnet sind, zumindest das gleiche Helligkeitsbin aufweisen, also bei gleicher Stromstärke mit einer im Wesentlichen gleichen Helligkeit Licht emittieren. Die entsprechende Bin-Information (Helligkeit und Farbtemperatur) wird vom Hersteller der Halbleiterlichtquellen in der Regel in Form einer zugeordneten Codierung mitgeteilt.

Damit die Steuer- und/oder Regeleinrichtung 14 die entsprechende Betriebsgröße für einen gewünschten von der Halbleiterlichtquelle 10 emittierten Lichtstrom einstellen kann, wird beispielsweise während einer Montage der Beleuchtungseinrichtung auf der Leiterplatte oder auf dem Trägerelement 11 der Halbleiterlichtquelle 10 ein Messwiderstand 16 angeordnet, dessen elektrischer Widerstandswert eine direkte Zuordnung zum aktuellen Helligkeitsbin liefert. Der Widerstandswert des Messwiderstands 16 wird über zwei Messleitungen 18 von der Steuer- und/oder Regeleinrichtung 14 ermittelt.

Zum ordnungsgemäßen Betreiben der Halbleiterlichtquelle 10 ist neben der Information des herstellungsbedingten Bins auch eine aktuelle Betriebstemperatur der Halbleiterlichtquelle 10 von Bedeutung. Dazu ist bekanntermaßen auf der Leiterplatte, beziehungsweise auf dem Trägerelement 11, ein Sensorelement 20 angeordnet, über dessen Signale die Steuer- und/oder Regeleinrichtung 14 - ebenfalls über zwei Messleitungen 22 - die entsprechende Betriebstemperatur der Halbleiterlichtquelle 10 ermittelt. Das Sensorelement 20 ist in dieser Ausgestaltung ein Temperatursensor. Das Sensorelement 20 ist mit der Halbleiterlichtquelle 10 thermisch gekoppelt. In der Realisierung können zwei der vier Messleitungen 18 und 22 zusammengefasst werden, so dass nur drei Messleitungen zum ordnungsgemäßen Betreiben der Halbleiterlichtquelle 10 erforderlich sind.

Fig. 2 zeigt eine Darstellung zum Betrieb der Halbleiterlichtquelle 10 in einer erfindungsgemäßen Beleuchtungseinrichtung in einer bevorzugten Ausführungsform. Die Halbleiterlichtquelle 10 wird - identisch zum unter Bezug auf die Fig. 1 erläuterten Stand der Technik - über die zwei Betriebsleitungen 12 durch die Steuer- und/oder Regeleinrichtung 14 betrieben. Abweichend vom Stand der Technik ist möglichst nahe an der Halbleiterlichtquelle 10 ein kombiniertes Speicher- und Sensorelement 24 wärmeleitend zur Halbleiterlichtquelle 10 auf der Leiterplatte beziehungsweise auf dem Trägerelement 11 angeordnet. Das Speicher- und Sensorelement 24 weist dabei bevorzugt ein elektronisches Speicherelement 26 und das Sensorelement 20 als integrale Einheit auf.

Das elektronische Speicherelement 26 weist die Eigenschaften eines RFID-Etiketts (Radio Frequency Identification-Etikett) auf, wobei die der Halbleiterlichtquelle 10 zugeordnete Bin-Information in codierter Form auf dem Speicherelement 26 gespeichert ist. Das Etikett 26 wird auch als Tag oder Transponder bezeichnet. Die Bin-Information umfasst zumindest das Helligkeitsbin, kann aber auch zusätzlich eine Information zur Farbtemperatur enthalten. Die Bin-Information wird durch eine nicht dargestellte externe und im Stand der Technik bekannte Schreibeinrichtung auf dem RFID-Etikett als Speicherelement 26 gespeichert.

Zum Auslesen der Bin-Information verfügt die Steuer-und/oder Regeleinrichtung 14 über eine RFID-Leseeinrichtung 28. Die Daten werden durch die RFID-Leseeinrichtung 28 über ein elektromagnetisches Feld eingelesen, das von der RFID-Leseeinrichtung 28 erzeugt wird und das von dem auszulesenden Element moduliert wird, was auch als Lastmodulation bekannt ist. Das Auslesen erfolgt damit insbesondere kontaktlos, also ohne Messleitungen 18, 22. Die von der RFID-Leseeinrichtung 28 eingelesenen Daten werden der Steuer- und/oder Regeleinrichtung 14 zur Regelung der Betriebsgröße zum Betreiben der Halbleiterlichtquelle 10 zur Verfügung gestellt. Der Pfeil 29 repräsentiert einen Datenfluss von der RFID-Leseeinrichtung 28 zur Steuer- und/oder Regeleinrichtung 14.

In einer weiteren Ausführungsform kann die Übermittlung der Daten auch nicht kontaktlos erfolgen. Dazu ist es beispielsweise nötig, auf die Versorgungsleitungen 12 der Halbleiterlichtquelle 10 ein elektromagnetisches Feld aufzumodulieren, welches durch das auszulesende Etikett 26 verändert wird. Die Antennenstrukturen der RFID-Leseeinrichtung 28 und des Etiketts 26 können dadurch optimiert, beziehungsweise eingespart werden.

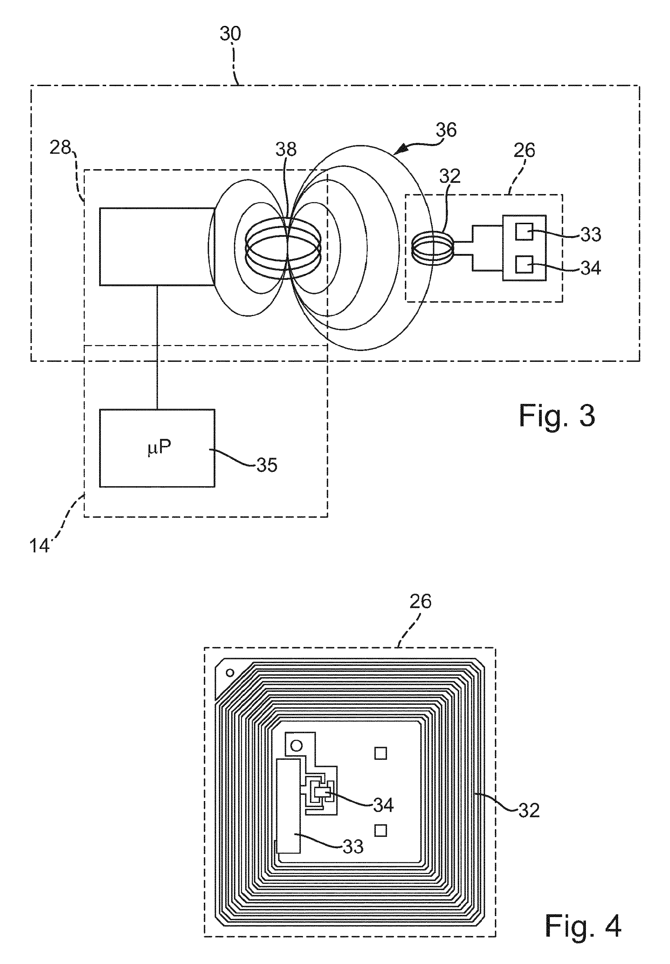

Fig. 3 zeigt eine Ausgestaltung eines RFID-Systems 30 zur Kommunikation zwischen dem Speicherelement 26 und der RFID-Leseeinrichtung 28. Die Leseeinrichtung 28 umfasst eine Sende-/ Empfangsantenne 38 zum kontaktlosen Einlesen von auf dem Etikett 26 gespeicherten Informationen. An die Leseeinrichtung 28 ist die einen Mikroprozessor 35 aufweisende Steuer- und/oder Regeleinrichtung 14 angeschlossen, welche die von der Leseeinrichtung 28 eingelesenen Daten verarbeitet, insbesondere interpretiert und auswertet und anschließend die Halbleiterlichtquelle 10 mit der entsprechend eingestellten Betriebsgröße steuert.

Auf dem Speicherelement 26 befindet sich ein Speicherchip 34, auf dem durch die externe Schreibeinrichtung (nicht dargestellt) die Informationen zum Betreiben der Halbleiterlichtquelle 10 permanent abgespeichert wurden. Durch die permanente Speicherung der Informationen wird keine zusätzliche Energie zur Speicherung benötigt. Des weiteren weist das Etikett 26 ein als analoger elektronischer Schaltkreis ausgebildetes Mittel 33 zum kontaktlosen Fremdauslesen der gespeicherten Informationen auf.

Der prinzipielle Aufbau des RFID-Etiketts als Speicherelement 26 ist in Fig. 2 dargestellt. Das Speicherelement 26 kann, je nach Ausführungsform eine Dicke von weniger als 1 Millimeter und eine Länge von wenigen Millimetern haben. Es umfasst in seinem Inneren eine spulenförmige Antenne 32, den als Mittel 33 dienenden analogen Schaltkreis zum Empfangen und Modulieren eines elektromagnetischen Feldes, den Speicherchip 34, und eventuell einen zusätzlichen digitalen Schaltkreis und bei einem aktivem RFID-Etikett eine Batterie (in Fig. 3 nicht dargestellt) .

Eine RFID-Kommunikation funktioniert folgendermaßen: Ausgangspunkt einer kontaktlosen Leseaktion der auf dem RFID-Etikett als Speicherelement 26 gespeicherten Information ist die Leseeinrichtung 28. Diese erzeugt ein hochfrequentes elektromagnetisches Wechselfeld, welches über die Antenne 38 und über die Funkverbindung 36 zur Antenne 32 des Etiketts 26 aufgebaut wird. In der spulenförmigen Antenne 32 entsteht durch das von der Antenne 38 ausgesandte elektromagnetische Feld ein Induktionsstrom. Durch diesen Induktionsstrom wird im Etikett 26 ein Kondensator (nicht dargestellt) aufgeladen, der für den Zeitraum der Kommunikation für die elektrische Versorgung des Etiketts 26 sorgt.

In einer bevorzugten Ausgestaltung wird das Etikett 26 komplett aus dem genannten elektromagnetischen Wechselfeld mit Energie versorgt, so dass allenfalls Kondensatoren, nicht aber Batterien auf dem Etikett vorhanden sein müssen.

Die Versorgung des RFID-Etiketts 26 kann auch über die Versorgung der Halbleiterlichtquelle 10 erfolgen. Wird das Etikett 26 parallel zu einer (oder mehreren) Halbleiterlichtquelle 10 geschaltet, steht eine relativ stabile Spannung für den Betrieb des Etiketts 26 zur Verfügung.

Der als Mittel 33 dienende analoge Schaltkreis des Etiketts 26 enthält Mittel zum Auslesen der Information aus dem Speicherchip 34 und verändert durch Modulation das von der Leseeinrichtung 28 ausgesandte, elektromagnetische Wechselfeld entsprechend den Informationen. Die Veränderung des Feldes kann von der Leseeinrichtung 28 detektiert werden. Zur Veränderung des Feldes ist bspw. eine sog. Lastmodulation des Wechselfeldes vorgesehen, bei welcher Energie des magnetischen Wechselfeldes durch Kurzschließen verbraucht wird. Das Etikett 26 sendet also kein Feld aus, sondern verändert nur das elektromagnetische Feld der Leseeinrichtung 28 durch Modulation.

Das in Fig. 2 dargestellte kombinierte Speicher- und Sensorelement 24 der erfindungsgemäßen Beleuchtungseinrichtung weist zusätzlich zum Etikett 26 das Sensorelement 20 auf. Das Sensorelement 20 kann dabei beispielsweise Temperatur-abhängige Widerstände oder Thermoelemente umfassen und ist dazu eingerichtet, über die Steuer- und/oder Regeleinrichtung 14 eine jeweilige Betriebstemperatur der Halbleiterlichtquelle 10 ermitteln zu können. Dazu ist beispielsweise vorgesehen, dass das Sensorelement 20 seine Signalinformation in einem separaten und zusätzlichen sowie dem Sensorelement zugeordneten Speicher derart speichert, dass dessen Speicherinhalt durch die bekannte RFID-Kommunikation zur Leseeinrichtung 28 übertragen werden kann.

Eine weitere Ausgestaltung sieht vor, dass das Sensorelement 20 seine Signalinformation in den Speicherchip 34 des Etiketts 26 einbringt und damit die Bin-Information im Speicherchip 34 ergänzt, dessen Inhalt anschließend durch das bekannte Verfahren der RFID-Kommunikation übertragen wird. Danach kann in jedem Fall in regelmäßigen zeitlichen Abständen neben der Bin-Information auch die aktuelle Betriebstemperatur der Halbleiterlichtquelle 10 über die Leseeinrichtung 28 an die Steuer- und/oder Regeleinrichtung 14 übertragen werden, um die Halbleiterlichtquelle 10 anschließend ordnungsgemäß betreiben zu können.

Das Speicher- und Sensorelement 24 ist bevorzugt als ein sogenanntes semi-aktives RFID-Etikett ausgebildet, das eine Sensorfunktion unterstützen kann, wobei das semi-aktive Etikett beispielsweise regelmäßige Sensormessungen durchführt. Die Sensorsignale werden dabei zum Beispiel in einem separaten - meist flüchtigen - Speicherelement des semi-aktiven RFID-Etiketts abspeichert. Solche semi-aktiven RFID-Etiketten weisen in der Regel eine Stützbatterie auf, die für den Betrieb insbesondere der Sensorfunktion nötig ist. Das semi-aktive Etikett kann dazu auch parallel zu einer (oder mehreren) Halbleiterlichtquelle geschaltet werden, wodurch eine relativ stabile Spannung für den Betrieb zur Verfügung gestellt werden kann. Das Übertragen der gespeicherten Information geschieht nach dem bekannten Verfahren der RFID-Kommunikation.

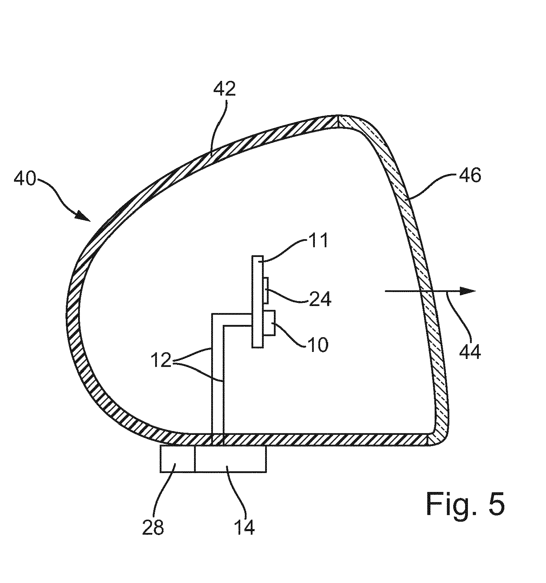

Fig. 5 zeigt eine stark vereinfachte Darstellung einer erfindungsgemäßen Beleuchtungseinrichtung 40 in der bevorzugten Ausführungsform in einem Längsschnitt. Die Beleuchtungseinrichtung 40 kann als Scheinwerfer oder als Leuchte ausgebildet sein und weist ein Gehäuse 42 auf, das in Lichtaustrittsrichtung 44 durch eine transparente Abdeckscheibe 46 verschlossen ist. Im Innern des Gehäuses 42 ist das Trägerelement 11 in der Regel auf einer Leiterplatte (nicht dargestellt) angeordnet. Das Trägerelement 11 weist in Lichtaustrittsrichtung 44 die Halbleiterlichtquelle 10 und das Speicher- und Sensorelement 24 auf. Üblicherweise ist der Halbleiterlichtquelle 10 eine Primäroptik (nicht dargestellt) in Form einer Vorsatzoptik und/oder eines Reflektors zur Erzeugung einer gewünschten Lichtverteilung zugeordnet.

Das Speicher- und Sensorelement 24 ist möglichst nahe an der Halbleiterlichtquelle 10 auf dem Trägerelement 11 positioniert. Über die zwei Betriebsleitungen 12 wird die Halbleiterlichtquelle 10 durch die Steuer- und/oder Regeleinrichtung 14 angesteuert und betrieben. Die Steuer-und/oder Regeleinrichtung 14 ist bevorzugt außerhalb des Gehäuses 42 angeordnet, wobei der Steuer- und/oder Regeleinrichtung 14 die RFID-Leseeinrichtung 28 zugeordnet ist. Die RFID-Leseeinrichtung 28 kommuniziert - wie oben beschrieben - kontaktlos durch das Gehäuse 42 mit dem Speicher- und Sensorelement 24.

Bei einer Ausgestaltung der Beleuchtungseinrichtung 40 als Projektionssystem ist im Innern des Gehäuses 42 in Lichtaustrittsrichtung 44 vor der Abdeckscheibe 46 zusätzlich eine Sekundäroptik zur Projektion der in der Beleuchtungseinrichtung 40 erzeugten Lichtverteilung auf die Fahrbahn vor das Kraftfahrzeug angeordnet.

Je nach Ausgestaltung weist die Beleuchtungseinrichtung 10 zwischen der Halbleiterlichtquelle 10 und der Sekundäroptik beziehungsweise der Abdeckscheibe 46 eine nicht dargestellte Blendenanordnung zur Erzeugung einer Hell-Dunkelgrenze auf der Fahrbahn auf.

Das Speicher- und Sensorelement 24 der erfindungsgemäßen Beleuchtungseinrichtung weist bevorzugt eine Temperatursensorfunktion auf, um die Betriebstemperatur der Halbleiterlichtquelle 10 zu ermitteln, da die Betriebstemperatur der Halbleiterlichtquelle 10 die Emission des Lichtstroms beeinflusst. In einer weiteren Ausgestaltung weist die Beleuchtungseinrichtung alternativ oder ergänzend zu einem Temperatursensor einen Lichtsensor auf.

Der Lichtsensor dient dann ebenfalls zur Steuerung, beziehungsweise Regelung, des emittierten Lichtstroms der Halbleiterlichtquelle 10. In diesem Fall weist das Speicher- und Sensorelement 24 bevorzugt eine Lichtsensorfunktion auf.

Durch das kontaktlose Lesen der jeweiligen Bin-Information und der aktuellen Betriebstemperatur der Halbleiterlichtquelle 10 ist es möglich, ohne Messleitungen 18, 22 und ohne Messwiderstand 16 die nötigen Betriebsparameter zum ordnungsgemäßen Betreiben der Halbleiterlichtquelle 10 durch die Steuer- und/oder Regeleinrichtung 14 zu erlangen. Dies macht die Beleuchtungseinrichtung, sowie das Betreiben der Beleuchtungseinrichtung kostengünstig, wartungsfreundlich und betriebssicher.

## Patentansprüche

1. Beleuchtungseinrichtung (40) für ein Kraftfahrzeug, mit mindestens einer Halbleiterlichtquelle (10) zum Erzeugen von Licht, mit einer Steuer- und/oder Regeleinrichtung (14), und mit einem der mindestens einen Halbleiterlichtquelle (10) zugeordneten Speicherelement (26), auf dem charakterisierende Informationen der mindestens einen Halbleiterlichtquelle (10) gespeichert sind, wobei die Steuer- und/oder Regeleinrichtung (14) Mittel zum kontaktlosen Auslesen und anschließenden Auswerten der auf dem Speicherelement (26) gespeicherten Informationen aufweist, **dadurch gekennzeichnet, dass** die Beleuchtungseinrichtung (40) ein mit der mindestens einen Halbleiterlichtquelle (10) gekoppeltes Sensorelement (20) aufweist, und dass die Steuer- und/oder Regeleinrichtung (14) dazu eingerichtet ist, eine Messgröße der mindestens einen Halbleiterlichtquelle (10) unter Verwendung des Sensorelements (20) kontaktlos zu erfassen und mindestens eine Betriebsgröße der mindestens einen Halbleiterlichtquelle (10) in Abhängigkeit von den ausgelesenen charakterisierenden Informationen des Speicherelements (26) und der kontaktlos erfassten Messgröße des Sensorelements (20) einzustellen.

2. Beleuchtungseinrichtung (40) nach Anspruch **1, dadurch gekennzeichnet, dass** das Sensorelement (20) mit dem Speicherelement (26) eine integrale Einheit (24) bildet.

3. Beleuchtungseinrichtung (40) nach Anspruch 1 oder 2, **dadurch gekennzeichnet, dass** die Messgröße eine Betriebstemperatur der mindestens einen Halbleiterlichtquelle (10) ist.

4. Beleuchtungseinrichtung (40) nach einem der vorhergehenden Ansprüche, **dadurch gekennzeichnet, dass** die charakterisierenden Informationen eine Information über die herstellungsbedingten Eigenschaften der mindestens einen Halbleiterlichtquelle (10) enthalten.

5. Beleuchtungseinrichtung (40) nach Anspruch 4, **dadurch gekennzeichnet, dass** die Eigenschaften eine Helligkeit und Farbtemperatur der mindestens einen Halbleiterlichtquelle (10) sind.

6. Beleuchtungseinrichtung (40) nach einem der vorhergehenden Ansprüche, **dadurch gekennzeichnet, dass** die Betriebsgröße der Halbleiterlichtquelle (10) eine elektrische Stromstärke, eine elektrische Spannung oder ein Tastverhältnis der Stromstärke und/oder der Spannung ist.

7. Beleuchtungseinrichtung (40) nach einem der vorhergehenden Ansprüche, **dadurch gekennzeichnet, dass** das Speicherelement (26) und das Sensorelement (20), sowie die Mittel zum kontaktlosen Auslesen der gespeicherten Informationen Teil eines RFID-Systems (30) sind.

8. Steuer- und/oder Regeleinrichtung (14) zum Betreiben mindestens einer Halbleiterlichtquelle (10) einer Beleuchtungseinrichtung (40) mit den Merkmalen des Anspruchs 1, wobei der mindestens einen Halbleiterlichtquelle (10) ein Speicherelement (26) zur Speicherung von charakterisierenden Informationen der mindestens einen Halbleiterlichtquelle (10) zugeordnet ist, und wobei die Steuer- und/oder Regeleinrichtung (14) Mittel zum kontaktlosen Auslesen und anschließenden Auswerten der auf dem Speicherelement (26) gespeicherten Informationen aufweist, **dadurch gekennzeichnet, dass** die Beleuchtungseinrichtung (40) ein mit der mindestens einen Halbleiterlichtquelle (10) gekoppeltes Sensorelement (20) aufweist, und dass die Steuer- und/oder Regeleinrichtung (14) dazu eingerichtet ist, eine Messgröße der mindestens einen Halbleiterlichtquelle (10) unter Verwendung des Sensorelements (20) kontaktlos zu erfassen und mindestens eine Betriebsgröße der mindestens einen Halbleiterlichtquelle (10) in Abhängigkeit von den ausgelesenen charakterisierenden Informationen des Speicherelements (26) und der kontaktlos erfassten Messgröße des Sensorelements (20) einzustellen.

9. Steuer- und/oder Regeleinrichtung (14) nach Anspruch 8 oder 9, **dadurch gekennzeichnet, dass** die Steuer- und/oder Regeleinrichtung (14) eine Leseeinrichtung (28) zum kontaktlosen Auslesen der auf dem Speicherelement (26) gespeicherten und von dem Sensorelement (20) bereitgestellten Informationen aufweist.

10. Sensorelement (20) einer Beleuchtungseinrichtung (40) mit den Merkmalen des Anspruchs 1, wobei die Beleuchtungseinrichtung (40) mindestens eine Halbleiterlichtquelle (10) und eine Steuer- und/oder Regeleinrichtung (14) aufweist, **dadurch gekennzeichnet, dass** das Sensorelement (20) mit der mindestens einen Halbleiterlichtquelle (10) gekoppelt ist, wobei das Sensorelement (20) dazu eingerichtet ist, mit der Steuer-und/oder Regeleinrichtung (14) kontaktlos zusammenzuwirken und im Zusammenwirken mit der Steuer- und/oder Regeleinrichtung (14) eine Messgröße der mindestens einen Halbleiterlichtquelle (10) als Signal bereitzustellen.
